# NEUE EUROPÄISCHE PATENTSCHRIFT

(11) **EP 1 604 346 B2**
(45) Veröffentlichungstag und Bekanntmachung des Hinweises auf die Entscheidung über den Einspruch: **07.07.2010**
(45) Hinweis auf die Patenterteilung: 23.05.2007
(21) Anmeldenummer: 04717520.3
(22) Anmeldetag: 05.03.2004
(51) Int. Cl.: G09F 21/04, G09F 15/00, G09F 19/22

(54) **SPANNRAHMEN FÜR EINE PLANE**
TARPAULIN MOUNTING FRAME
CADRE DE SERRAGE POUR BACHE

(30) Priorität: 10.03.2003 AT 3672003; 06.11.2003 AT 17752003
(43) Veröffentlichungstag der Anmeldung: 14.12.2005
(73) Patentinhaber: Schuh, Rainer Karl, 2700 Wiener Neustadt (AT)
(72) Erfinder: Schuh, Rainer Karl, 2700 Wiener Neustadt (AT)
(74) Vertreter: Patentanwälte Barger, Piso & Partner
(86) Internationale Anmeldenummer: PCT/AT2004/000072
(87) Internationale Veröffentlichungsnummer: WO 2004/081908

(56) Entgegenhaltungen:
- EP-A- 0 597 094
- EP-A- 1 271 456
- WO-A-01/35382
- DE-A- 10 033 243
- US-A1- 2002 104 245
- US-B1- 6 250 002

## Beschreibung

Die Erfindung betrifft einen Spannrahmen für eine Plane, insbesondere zur Montage auf einem LKW oder LKW-Anhänger, mit zumindest einem Rahmenprofil und einem Ankerprofil, entsprechend dem einleitenden Teil des Anspruches 1.

Ein derartiger Spannrahmen ist in der US2002/0104245 A beschrieben, dabei benötigt man zur sicheren Verbindung zwischen Rahmenprofil und Ankerprofil zwingend eine Schraubverbindung.

Ein Spannrahmen ohne derartige Schraubverbindung ist in der WO 01/35382 A geoffenbart. Insbesondere die Fig. 15 bis 30 dieser Druckschrift zeigen eine Ausführungsform, bei der durch eine Mehrzahl paralleler Leisten die Spannbedingungen für die Plane leicht zu ändern ist, wobei der Rahmen durch die geometrischen Abmessungen eigensicher, das heißt, ohne zusätzliche Fixierungen gegen ungewolltes Öffnen im Ruhezustand gesichert ist Dazu ist allerdings folgendes zu sagen: Das obere Kederprofil wird durch den Zug der Plane mit einem Drehmoment gegen den Uhrzeigersinn in Fig. 30 um den Einhängpunkt am Rahmenprofil beaufschlagt. Dies würde zu einer Reduzierung der Spannung der Plane führen, doch kann das Kederprofil sich dank seines nach oben und zur (nicht dargestellten) Rahmenebene hin erstreckenden Randes nicht verdrehen, so dass die jeweils gewählte Leiste fest an der Rast des Rahmenprofils verbleibt.
Ähnlich ist die Situation am unteren Rand der Plane: Der Zug der Plane beaufschlagt das Kederprofil mit einem Drehmoment im Uhrzeigersinn um sein Pseudogelenk (etwa in der Mitte des Profils, gebildet durch das Ende des abstehenden Teils des Rahmenprofils). Eine Bewegung in Richtung des Uhrzeigersinnes um diesen Punkt wird allerdings durch das Spannprofil verhindert, an dem das planenfeme Ende des Kederprofils eingehängt ist. Dieses Spannprofil wird ebenfalls mit einem Moment im Uhrzeigersinn beaufschlagt und stützt sich dagegen mit seinem weit abstehenden Ende am (nicht dargestellten) Rahmen ab. So elegant diese Lösumg auf den ersten Blick aussieht, so problematisch ist sie in der Praxis: Durch die weit abstehenden Schenkel des Rahmenprofils, an deren Enden jeweils die Schwenkachsen des Kederprofils als Pseudoachsen ausgebildet sind, treten große Biegemomente und Biegespannungen auf, die über die gesamte Lebensdauer des Profils auch bei rauhem Betrieb ohne bleibende Deformation ertragen werden müssen. Dazu kommt noch, dass an den äußersten Enden dieser Schenkel die gesamte Zugkraft der Plane angreift, was ein Überlasten beim Aufbringen der Plane durch das Spannprofil sehr leicht möglich macht.
Schließlich hängt die Eigensicherheit des Spannrahmens ausschließlich vom Anliegen der äußersten Ränder des Kederprofils bzw. des Spannprofils an Bauteilen ab, die nicht zum Rahmen gehören, was einerseits durch das Fehlen jeglicher anderen Abstützung dieser Profile zu hohen Biegebeanspruchungen und der Neigung zu plastischen Deformationen bzw. zum Bruch führt und andererseits eine entsprechende Ausbildung der Bauteile erfordert, die den Rahmen tragen.
Die Ausbildung der Profile ist im Falle von Erschütterungen nicht geeignet, die Eigensicherheit zuverlässig aufrecht zu erhalten, im Falle des Eindringens und Auffrierens von Wasser in die Spalten zwischen Rahmen bzw. Rahmenumgebung und Kederprofil bzw. Spannprofil kommt es unweigerlich zum Öffnen des Spannrahmens.
Ein weiterer Nachteil besteht darin, dass diskrete Einrastmöglichkeiten für das auf die Plane wirkende Profil, nur an der dem Spanner bzw. der Spannvorrichtung gegenüberliegenden Einspannseite vorgesehen sind. Darüber hinaus fallen die Profile auseinander, wenn keine Spannung anliegt, wodurch die Bedienung der Plane bzw. der Profile durch eine einzige Person nahezu unmöglich wird.

Ein anderer Spannrahmen ist in der EP 0 495 688 A1 geoffenbart, und zwar in der der Erfindung am nächsten kommenden Ausführungsform, entsprechend den Fig. 4a und 4b dieser Druckschrift. Diese Figuren zeigen aber eine Spannvorrichtung für eine Plane, bei der auch in der Endstellung durch den Zug in der gestrafften Plane stets ein Drehmoment in Öffnungsrichtung der Spannvorrichtung verbleibt, somit nicht eigensicher ist. Es muß daher diese Spannvorrichtung auch bei Anwendung an stillstehenden Plakatwänden od.dgl. stets zusätzlich gesichert werden, was im dargestellten Fall durch eine elastische Schnappverbindung geschieht. Diese Tendenz zur Öffnung der Spannvorrichtung besteht auch dann, wenn die beiden Spannrahmen nicht, wie geoffenbart, normal zur eigentlichen Planenfläche angeordnet sind, sondern in der Planenebene verlaufen, da auch dann die zwingend vorgesehenen Anlenk- bzw. Umlenkkanten das Drehmoment in Öffnungsrichtung zwingend vorgeben. Darüber hinaus bietet die aus der EP 0 495 688 A1 bekannte Vorrichtung keine Möglichkeit für eine leichte und einfache Adaptierung der Spannung bzw. Anpassung an veränderte Planengrößen, wie dies beispielsweise beim Ausdehnen von Gewebe, das längere Zeit auf Zug beansprucht wird, der Fall sein kann. Beispielsweise muss bei der Einstellung der Planenspannung auf dem Rahmen das Spannprofil in eine andere Kedernut umgefädelt werden.
Im Vergleich dazu zielt die Erfindung darauf ab, eine sogenannte eigensichere Spannvorrichtung zu schaffen, darunter ist eine solche Vorrichtung zu verstehen, die durch den Zug in der Plane in Schließstellung gehalten wird. Dass, darüber hinaus, bei verschiedenen Anwendungsfällen, wie Planen von LKWs od. dgl. als zusätzliche Sicherheit eine weitere Fixierung vorgesehen sein kann, ändert nichts am Ziel dieser Eigensicherheit.

Die US 5,893,227 A offenbart einen Spannrahmen ähnlich dem der vorgenannten Druckschrift, wobei allerdings durch das Vorsehen mehrerer rillenförmiger Vertiefungen (diese können auch als hakenförmige Vorsprünge angesehen werden) die Möglichkeit einer relativ einfachen und raschen Adaptierung an geänderte Spannbedingungen erzielt werden kann. Das Problem der Eigensicherheit besteht allerdings auch hier in voller Schärfe, es wird hier durch ein Außenprofil gelöst, das so über den gesamten Rahmen geschnappt wird, sodass ein Wegkippen des eigentlichen Planenhalters in Öffnungsrichtung verhindert wird. Auch bei diesem Spannrahmen liegen die Spannvorrichtungen in einer Ebene, die normal zur Platenebene verläuft, anders als bei der EP 0 495 688 A1 ist hier allerdings eine Anordnung innerhalb oder parallel zur Planenebene nicht möglich, da dann die Sicherung durch das Außenprofil nicht mehr funktioniert und der Spannrahmen nicht verwendet werden kann.
Im Vergleich zu diesem Stand der Technik ist es Aufgabe der Erfindung, einen Spannrahmen zu scharren, der diese Nachteile nicht aufweist.

Aus der EP 1 271 456 A ist ein Spannrahmen bekannt, bei dem die einzelnen Rahmenbestandteile wesentlich günstiger belastet werden als bei der vorgenannten Druckschrift, der aber, wie insbesondere aus den Fig. 9 und 10 hervorgeht, nicht eigensicher ist, sondern einer zusätzlichen Befestigung bedarf. Darüber hinaus ist interessanterweise dieser Spannrahmen nur so verstellbar, dass der Keder der Plane über die ganze Länge des Spannrahmens ausgefädelt und in eine andere der zahlreichen Kederaufnahmen des Rahmens wiederum eingefädelt wird. Diese Notwendigkeit des Ein- und Ausfädeln des Keders ist äußerst zeitraubend und mühselig, darüber hinaus wegen der Länge des Rahmens und der Steifigkeit des Keders auch viel Platz beanspruchend und nicht überall ohne Probleme durchführbar.
Dies hat offensichtlich auch der Erfinder der Vorrichtung gemäß der vorstehenden Druckschrift erkannt, was zur US 6,209,245 B geführt hat, in der die Verstellbarkeit der Spannung durch ein Sägezahnprofil und ein Gegenprofil gewährleistet ist, wobei allerdings auf jede Art eines durch Klappen oder Verschwenken montierbaren Spannrahmens verzichtet wird und auch die Eigensicherheit keinerlei Rolle spielt, da der Spannrahmen durch Schrauben fixiert wird, was aber die Erfindung prinzipiell vermeiden und, wenn überhaupt nur als eine zusätzliche Maßnahme (Erschwerung des Diebstahls, etc.) zulassen möchte.

Die WO 03/030133 A offenbart einen Spannrahmen, die eigensicher ist, aber keinen Keder, sondern einen Wickelstab zum Halten des Planenrandes verwendet, was in der Praxis von den Benutzern abgelehnt wird. Der Grund für diese Ablehnung ist nicht nur das mühselige, weil notwendigerweise genaue Umwickeln des Wickelstabes mit dem Planenrand, der ja mehrere Meter lang sein kann, sondern auch die Tatsache, dass durch das Spannen der Plane, insbesondere bei Erschütterungen, aber auch bei thermischen Dimensionsandenmgen das Kriechen der Plane entlang des Wickelstabes über längere Zeiten nicht ausgeschlossen werden kann, so dass eine zusätzliche Befestigung der Plane am Wickelstab in der Praxis immer notwendig ist, wodurch aber die Vorteile des Wickelstabs gegenüber dem Keder (Falten der Plane wird leicht möglich, Rand der Plane bedarf keiner besonderen Bearbeitung) verloren gehen.
Da die Eigensicherheit der Vorrichtung gemäß der WO 03/030133 A auf die Form des Rahmenprofils, insbesondere im Bereich seines Hakens, des daran angepassten Zwischenprofils und des Wickelstabes für das Erreichen der Eigensicherheit notwendig sind, lässt sich dieser Spannrahmen nicht auf die Verwendung eines Kederprofils umgestalten. Dazu kommt noch, dass durch die V-förmige Ausbildung des Hakens des Rahmenprofils starke Biegemomente und Biegekräfte auf den Haken ausgeübt werden, die eine entsprechend massive und damit teure Ausbildung erfordern, ähnlich der oben genannten WO 01/35382A.
Selbst, wenn all dies bedacht und verbessert wird, fehlt es diesem Spannrahmen noch an der leichten Justierbarkeit bzw. Verstellbarkeit, wie er bereits von anderen vorbekannten Spannrahmen erreicht wird.

Ein wieder anderer Spannrahmen ist aus der WO 00/79507 A1 bekannt. Dabei weist das Rahmenprofil mehrere Reihen von hakenartigen Vorsprüngen auf, in die ein Gegenhaken des Planenprofils eingehakt werden kann. Dies muß unter Spannung der Plane geschehen und benötigt ein Werkzeug. Auch zum Öffnen der Verbindung wird ein Werkzeug benötigt, sodass das Auswechseln der Plane oder ihr Straffen, wenn sie sich im Laufe der Zeit gedehnt hat, ein aufwendiger Prozeß ist.

Aus der DE 199 15 927 A1 ist ein Planenspanner bekannt, der eigentlich eine Art Riemenspanner ist, und mittels eines Verbindungsgliedes mit dem Planenrand verbunden ist. Dabei wirkt ein Spannhebel mit einem in seiner Länge verstellbaren und damit die Spannung bestimmenden Planenhalter zusammen. Diese Vorrichtung ist in vorbestimmten Abständen entlang des Randes der Plane anzubringen und einzeln zu justieren, was auf den ersten Blick die Flexibilität erhöht, aber im realen Betrieb nur die Justierarbeit vermehrt. Wegen der Einzelmontage jedes Spanners ist der Aufwand bei der Installation groß, bei der Montage muß jeder einzelne Spanner für sich betätigt werden, was zeitaufwendig ist.

Allgemein, wie beispielsweise in der WO 00/79507 A1 angegeben, sind zur Befestigung von Planen auf Rahmen sogenannte Kederprofile üblich. Diese Profile werden rings um die Plane mit dem Planenrand verbunden und weisen parallel zum Planenrand einen Wulst bzw. eine Verdickung auf, die mit einem Gegenprofil des Rahmens zusammenwirken kann. Bei üblichen, im wesentlichen rechteckigen, Planen werden zwei benachbarte Seiten mit ihrem Wulst in das Gegenprofil eines fest montierten Rahmens geschoben, die beiden anderen Seiten in ein Gegenprofil eines sogenannten Ankers. Die fest montierten Rahmenprofile sind bzw. werden am LKW-Aufbau, an der Hauswand oder wo immer die Plane befestigt werden soll, montiert und in einem Abstand, der im wesentlichen den Abständen der Wulste der Plane entspricht, wird ein Gegenprofil für die beiden Anker befestigt.

Diese Gegenprofile weisen in relativ engem Abstand Nuten auf, in die eine Leiste des Ankerprofiles eingedrückt werden, kann. Durch die engen Abstände ist es möglich, die Plane entsprechend zu spannen, um die bestmöglich passende Nut zum Einbringen der Leiste des Ankers zu wählen. Das Einbringen der Leiste in die Nut erfolgt mit einem Werkzeug, da zum Straffhalten der Plane nennenswerte Kräfte notwendig sind. In den meisten Fällen werden sodann die Anker in gewissem Abstand, zumindest aber im Bereich der Ecken, noch durch Schrauben mit dem die Nuten aufweisenden Profil verschraubt, um auch bei Vibrationen, Erschütterungen und beispielsweise dem Auffrieren von Wasser, das in den Bereich der Nut bzw. der Leiste eingedrungen ist, ein Aufgehen der Klemmsicherung verhindern.

In den meisten Fällen ist es notwendig, die mit Nuten versehenen Rahmenprofile auf drei Seiten vorzusehen, da zumeist nicht ausreichend Platz zum Einschieben des Wulstes des Keders in ein festes Rahmenprofil zur Verfügung steht, sodass auf drei Seiten der Plane Anker vorgesehen sind. Der im Zuge der Montage und auch der Demontage zu betreibende Aufwand ist beträchtlich, letztlich steht und fällt eine straffe und optisch ansehnliche Montage, wie sie wegen der Verwendung der Planen als Werbefläche unabdingbar ist, schon mit der genauen Befestigung des Keders am Planenrand, Korrekturen der Position eines einmal montierten Keders sind nahezu ausgeschlossen. Dazu kommt, dass auf drei Seiten der Plane die Leiste des Ankers mit einem Werkzeug in die richtige Nut des Rahmens gedrückt werden muß.

Andere, weiter ab von der Gattung der Erfindung liegende Spannsysteme sind aus der US 6,250,002 B, der EP 597 094 A und der DE 100 33 243 A bekannt

Es besteht somit ein Bedarf an einem Befestigungssystem für eine Plane, das die genannten Nachteile nicht aufweist und es gestattet, die Plane rasch, problemlos und ohne Werkzeug zu wechseln und, zumindest in einer Ausgestaltung, die demontierte Plane in dem Ausmaß zusammenzulegen bzw. zusammenzurollen, das der Plane an sich zuträglich ist, ohne dass weitere Beschränkungen zu beachten sind.

Erfindungsgemäß werden diese Ziele mit den im kennzeichnenden Teil des Anspruches 1 definierten Merkmalen erreicht. Die Unteransprüche definieren vorteilhafte Weiterbildungen der Erfindung.

Die Erfindung wird im folgenden an Hand der Zeichnung näher erläutert, dabei zeigt
die Fig. 1 eine Ausführungsform der Erfindung mit mehreren Schwenknuten,
die Fig. 2 eine andere Variante,
die Fig. 3, mit mehreren Nebenfiguren, eine weitere Variante,
die Fig. 4 ein fliegendes Kederprofil,
die Fig. 5 bis 8 eine Ausgestaltung der Erfindung und
die Fig. 9 eine weitere, sehr bedienungsfreundliche Ausgestaltung der Erfindung.

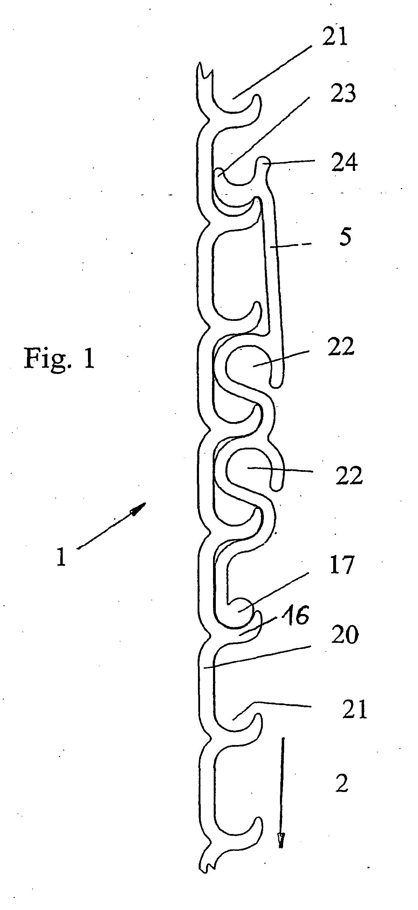

Die Fig. 1 zeigt ein Rahmenprofil 20 mit mehreren parallel verlaufenden Rillen bzw. Nuten 21, bei dem ein Anker 5 wahlweise in eine von mehreren, den einzelnen Planengrößen entsprechenden Nuten 21 eingelegt und eingeschnappt werden kann. Der Anker 5 wirkt mit einem Keder, nicht dargestellt, zusammen.

Das wellenförmige Rahmenprofil 20 wird an passender Stelle am LKW, der Hauswand, oder dem anderen Gegenstand, an dem die Plane befestigt werden soll, montiert und wirkt mit einem Anker 5 zusammen. Der Anker 5 weist an seinem einen, dem Planenzentrum, zugewandten Ende eine Verdickung bzw. einen Wulst 17 auf, der mit einer der nutartigen Vertiefungen 21 des Profils 20 nach Art eines Gelenkes oder Scharnieres zusammenwirkt.

Der Anker 5 ist aber nicht eben ausgebildet, sondern paßt sich der Wellenform des Profils 20 an und bildet dabei zumindest eine, im dargestellten Ausführungsbeispiel zwei, nebeneinander liegende Ausnehmungen 22 aus, in die wahlweise ein Keder seitlich eingeschoben werden kann.

An dem dem Wulst 17 abgewandten Ende trägt der Anker 5 einen abgewinkelten Arm 23, der mit einer der Ausnehmungen 21 des Profiles 20 nach Art eines Schnappmechanismus zusammenwirkt. Es kann eine zusätzliche Sicherung, z.B. durch Schrauben vorgesehen sein. Zum leichteren Abnehmen des montierten Ankers 5 kann ein kurzer Stummel 24 nahe des Armes 23 vorgesehen sein, durch den der obere Bereich des Ankers 5 elastisch verbogen und damit leichter aus der Schnappverbindung mit dem Profil 20 gelöst werden kann.

Die Lage des Halters 22 für den Keder bezüglich des Schnappmechanismus 21-23 und des Drehpunktes 17 - 21 bewirkt, dass bei Zug an der Plane in Richtung Pfeil 2 das "Eintauchen" des Armes 23 in die Rille 21 das Drehmoment um den Wulst 17 in seiner Rille 21 überwiegt, der Spannrahmen ist eigensicher.

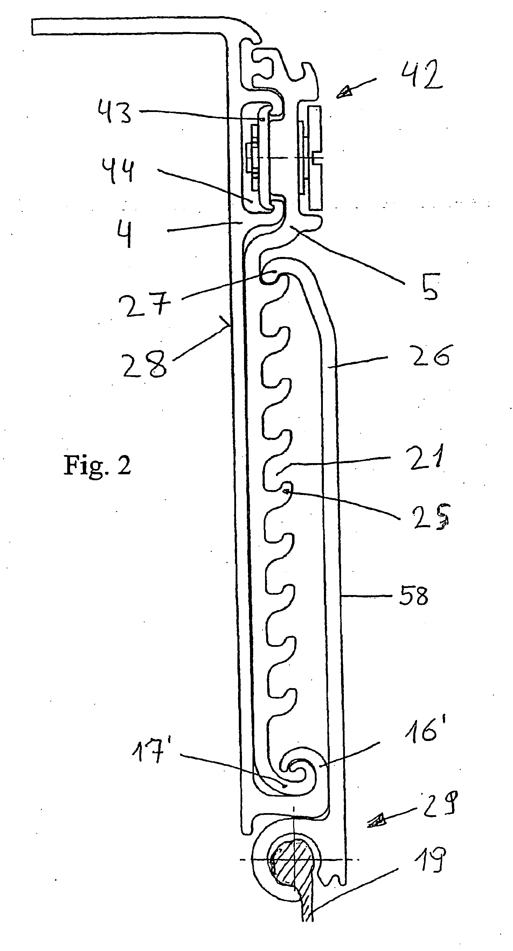

Die Fig. 2 zeigt eine Variante der Vorrichtung der Fig. 1, bei der ebenfalls die Spannung der Plane zum Halten der Vorrichtung in montierter Lage verwendet wird: Ein Rahmenprofil 4 ist auf dem Gegenstand, auf dem die Plane 19 aufgespannt werden soll, befestigt. Ein Ankerprofil 5 ist mittels Verdickung 17' in einer Vertiefung 16' drehbar. Die Form der beiden Profilabschnitte 16', 17' ist spiralartig, die beiden Teile bilden gemeinsam ein sogenanntes Spiralscharnier. Ein derartiges Scharnier kann innerhalb eines vorbestimmten Winkelbereiches verdreht werden, an weiterer Drehung wird es durch Formschluß gehindert. Die beiden Teile, die ein derartiges Scharnier ausbilden, können nur in axialer Richtung (normal zur Papierebene) ineinander geschoben werden, ein ineinander Stecken wie die Schwenkteile 17, 21 es ermöglichen, ist ausgeschlossen. Dadurch sind die beiden Teile, solange sie nicht axial zueinander verschoben werden (was aber, beispielsweise durch Endplättchen, leicht zu verhindern ist), unverlierbar miteinander verbunden, was im praktischen Betrieb große Vorteile mit sich bringt.

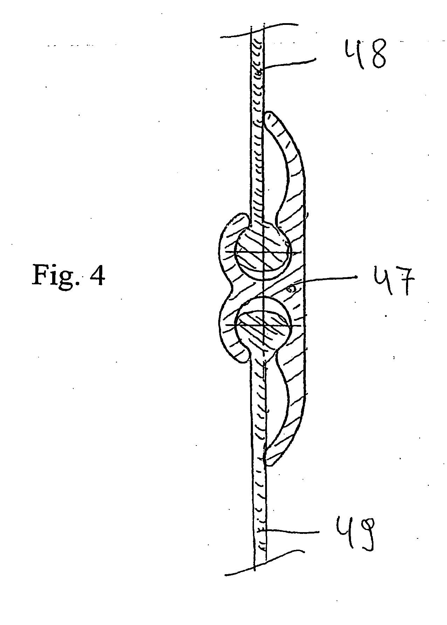

Das Ankerprofil 5 weist mehrere Nuten 21 bzw. Leisten 25 auf, die auf ähnliche Weise wie die Nuten/Leisten des Rahmenprofils gemäß Fig. 4 eine Justierung des Keders erlauben. Im vorliegenden Beispiel wird aber der Keder in einen eigenen Kederhalter 26 eingeschoben, der mit einem Haken 27 in die passende Nut 21 eingehängt wird.

Die Abstände der sich so ausbildenden Gelenke von der Rückenebene 28 des Rahmenprofils 4 weisen nun folgende Besonderheiten auf: Der Profilabschnitt 29 des Kederhalters 26, der den Keder aufnimmt, ist so ausgebildet, dass die Planenebene bzw. Plane 19 und damit die Zugkraft parallel zur Rückenebene 28 dieser Ebene näher liegt, als der Drehpunkt des Hakens 27 im Ankerprofil 5. Dadurch wird auf den Kederhalter 26 ein Moment in Schließrichtung (im Uhrzeigersinn) ausgeübt. Der Drehpunkt des Hakens 27 wiederum liegt der Rückenebene 28 näher als der Drehpunkt des Spiralscharniers 16, 17 des Ankerprofils 5 bezüglich des (festen) Rahmenprofils 4. Damit wird durch den Zug in der Plane 19 vom Kederhalter 26 ein Drehmoment in Schließrichtung (gegen den Uhrzeigersinn) auf das Ankerprofil 5 ausgeübt.

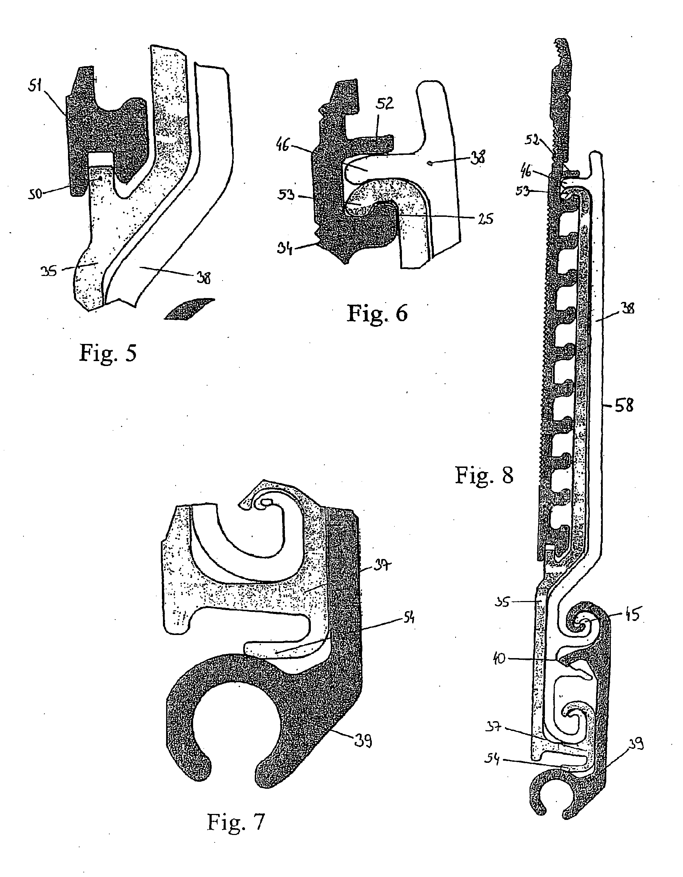

Da die Positionen der jeweiligen Drehachsen im dargestellten "montierten Zustand" knapp "jenseits" einer gestreckten Lage liegen, handelt es sich um einen doppelten Totpunktmechanismus, bei dem die Planenspannung für eine sichere Beibehaltung des geschlossenen Zustandes sorgt. Um den Einfluß von Vibrationen, das Auffrieren und den Diebstahlschutz etc. zu berücksichtigen, empfiehlt sich in der Praxis auch hier eine zusätzliche Sicherung (Schrauben, Nieten, etc.), doch ist der Verschluß in sich kraftschlüssig stabil, was im Stand der Technik nicht so leicht zu erreichen war. In Fig. 5 ist als derartige zusätzliche Sicherung ein drehbarer Ankermechanismus 42 dargestellt. Eine Haltescheibe 43 kann in einer Winkellage in die hinterschnittene Nut 44 gelangen, durch Verdrehen (bevorzugt um 90°) nimmt sie die dargestellte Lage ein, in der ihre breite Seite quer zur Nut liegt und so die Positionierung sichert. In beiden Varianten ist durch den Kontakt der einzelnen Profilteile miteinander eine hohe mechanische Stabilität erreicht.

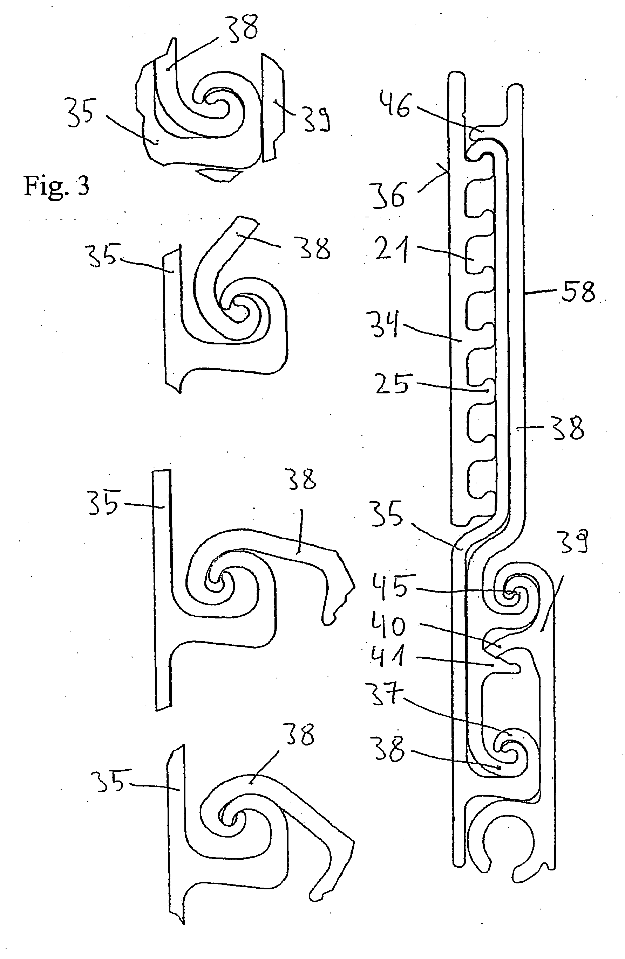

Die Fig. 3 und ihre Nebenfiguren zeigen eine Variante, bei der durch die Verwendung eines Kederhalters 39 und eines zweigeteilten Ankerprofils 35, 38 eine besonders stabile Verbindung mit der Plane geschaffen wird. Es wird dabei an einem Rahmenprofil 34 mit mehreren, Nuten ausbildenden Halteleisten ein gekröpfter Zwischenhalter 35 an passender Stelle eingehängt, der an seiner der Plane zugewandten Seite einen Haken 37 in Spiralform aufweist. Durch die Kröpfung des Zwischenhalters 35 liegt der Haken nahe der Rückseite 36 des Rahmenprofils 34. In den Haken 37 wird das Ankerprofil 38, wie oben erläutert, eingehängt, nachdem ein Kederprofil 39 in einen ebenfalls als Spiralscharnier 45 ausgebildeten Vorsprung des Ankerprofils 38 eingesteckt wurde. Durch Hochklappen des Ankerprofils kommt eine Abstützleiste 40 des Kederprofils mit einer Tragleiste 41 des Ankerprofils 38 in Kontakt und stabilisiert so die Verbindung.

Die auf die einzelnen Bauteile wirkenden Kräfte und Momente sind bei ordnungsgemäß geschlossenem Zustand, wie in Fig. 6 dargestellt, alle jeweils in Schließrichtung orientiert, sodass der Verschluß (so wie der gemäß Fig. 5) eigensicher ist. Diese Eigensicherheit wird noch dadurch erhöht, dass beim Einhängen des Zwischenprofils 35 in eine andere Nut 21 als dargestellt, beim Schließen des Spannrahmens eine Halteleiste 46 des Ankers 38 unter die benachbarte Leiste 25 des Rahmenprofils gedrückt wird und so eine kraftschlüssige Fixierung bewirkt. Um ein unbeabsichtigtes oder mißbräuchliches Lösen zu verhindern, können natürlich, wie oben erwähnt, zusätzlich Schrauben od.dergl. eingesetzt werden.

Die Nebenfiguren zeigen, von oben nach unten, die Beweglichkeit des Spiralscharniers zwischen dem Zwischenprofil 35 und dem Anker 38 samt den Grenzen dieser Verschwenkbarkeit.

Die Fig. 4 zeigt einen doppelten Kederhalter 47, der es ermöglicht, fertige Planen einheitlicher Größe an größeren Flächen zu befestigen. Es werden insbesondere Planen, die Reklame tragen, von den werbenden Unternehmen in großer Zahl einheitlich hergestellt und können von den Unternehmen, die Werbeflächen zu vermieten haben, in ihrer Größe nicht geändert oder adaptiert werden. Um nun derartige Planen auch auf vorhandenen, größeren Rahmen verwenden zu können, schlägt die Erfindung vor, die vorgegebenen Planen 48 durch die Verwendung von doppelten Kederhaltern 47 mit Randstreifen 49 passend ausgewählter Breite zu verbinden und dieses Patchwork am Rahmen zu montieren.

Die Verwendung derartiger doppelter Kederhalter ist mit den Spannsystemen gemäß dem Stand der Technik nicht erfolgreich möglich gewesen, da beim sukzessiven Spannen der Plane entlang ihres Randes die Keder immer wieder gegeneinander verrutscht sind und eine optisch befriedigende Montage eines extrem großen Aufwands bedurfte. Durch die Erfindung wird die Plane über die gesamte Länge ihres Randes gleichzeitig gespannt, es kommt zu keinen Scherkräften und damit auch nicht zum Verrutschen der einzelnen Planenteile gegeneinander im doppelten Kederhalter.

Die Fig. 5 bis 8 zeigen eine Ausgestaltung der Erfindung, ausgehend von einer Variante ähnlich der in Fig. 3 dargestellten Ausführungsform. Bei dieser ist es nicht möglich, die Teile des Rahmens ohne Plane zuverlässig zu befestigen und so insbesondere bei Planen von LKWs die Einzelteile des Rahmens ohne Probleme zu transportieren. Beim rauhen Betriebsklima und den rauhen Betriebsbedingungen im Frachtgewerbe sind lose Einzelteile aller Art streng verpönt und werden nur widerwillig akzeptiert. Um dieses Problem zu lösen, ist beim Rahmen gemäß den Fig. 5 bis 8 Folgendes vorgesehen:

Das Zwischenprofil (bzw. der Zwischenhalter) 35 weist im Bereich seiner Kröpfung eine zum Rahmenprofil 34 hin gerichtete Stummelleiste 50 auf, die in eine Nut 51 des Rahmenprofils 34 ragt. Dabei ist in der dargestellten "Transportlage" die Nut tiefer als die Leiste hoch ist. Das Rahmenprofil weist in seinem in der Darstellung oberen Bereich, in dem es mit der Halteleiste 46 des Ankerprofils 38 zusammenwirkt, einen Vorsprung 52 auf, der die Halteleiste 46 an ihrer oberen Flanke kontaktiert, sodass die Halteleiste 46 samt dem oberen Bügelende 53 des Zwischenprofils 35 zwischen der obersten Leiste 25, in die sie eingehängt sind, und dem Vorsprung 52 axial, das heißt hier in Spannrichtung der Plane, unabhängig davon, ob eine Plane vorhanden ist oder nicht, fixiert sind. Diese Fixierung übernimmt beim Einhängen in eine andere Leiste 25 die jeweils benachbarte "obere" Leiste 25.

Durch diese Ausbildung werden das Ankerprofil 38 und das Zwischenprofil 35 gemeinsam in ihrer Höhenlage fixiert und durch das Zusammenspiel zwischen der Leiste 50 und der Nut 51 gegen Verdrehen gesichert. Nur beim gewollten Zerlegen kann durch Abziehen des Ankerprofils 38 an seinem oberen Ende dessen Halteleiste 46 aus dem Zwischenraum zwischen dem Vorsprung 52 und der Leiste 25 (oder zwischen zwei benachbarten Leisten 25) gezogen werden, wodurch es möglich wird, das Zwischenprofil 35 (samt Ankerprofil 38) nach oben (in der Darstellung) zu Verschieben und das Bügelende 53 aus dem hakenförmigen Bereich der Leiste 25 zu bringen. Es muß daher die Nut 51 um soviel tiefer sein als die Leiste 50 hoch ist, damit diese Verschiebung ermöglicht wird.

Das Kederprofil 39 ist bei dieser Ausgestaltung nicht nur über das Spiralscharnier 45, die Abstützleiste 40 und das Umfassen des Hakens 37 am Ankerprofil 38 und am Zwischenprofil 35 gehalten, sondern durch eine Federleiste 54 am Zwischenprofil 35, die an der Außenseite des Kederbereiches angreift jedwedes unbeabsichtigtes Verschwenken des Kederprofils 39 um das Spiralscharnier 45 unmöglich macht. Nur mit entsprechender Kraft kann ein ausreichend großes Drehmoment am Kederprofil bewirkt werden, das zur elastischen Deformation der Federleiste in ausreichendem Ausmaß führt, um ein Verschwenken zu bewirken. Die beim Fahren ohne Plane auftretenden Massenkräfte (und nur solche treten auf), sind um Größenordnungen zu klein, um eine solche Deformation zu bewirken.

In den gezeigten Ausführungsformen der Fig. 2, 3, 8 und 9 ist die zur Ebene der Plane 19 im Wesentlichen parallele Außenfläche 58 des Kederhalters 26 bzw. des Ankerprofils 38 als glatte Oberfläche ausgebildet. Dies ermöglicht das Anbringen von gut sichtbaren, vorzugsweise Licht reflektierenden Abdeckungen, beispielsweise das Aufkleben von Bändern oder Folien, die als Sicherheitsmarkierungen im Straßenverkehr vom Gesetzgeber vorgeschrieben werden, an der Außenfläche 58. Selbstverständlich kann die Außenfläche 58 auch als Licht reflektierende Oberfläche ausgestaltet sein. Bänder, die, wie derzeit üblich, auf der Plane angebracht werden, beispielsweise durch Kleben oder Vernähen, verursachen immer wieder Probleme, denn durch die ständige Bewegung bzw. Vibrationen der Plane lösen sich die Bänder leicht ab. Dort wo keine Markierungen auf der Außenfläche 58 vorgesehen sind, kann der freie Platz auch für Werbematerial genutzt werden.

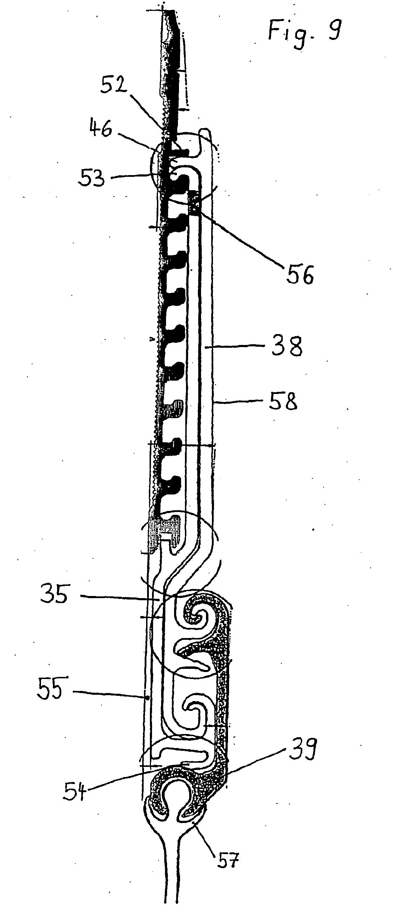

Eine Ausgestaltung der Erfindung ist in Fig. 9 gezeigt. Im Gegensatz zu Fig. 8 ist das Zwischenprofil 35 um einen Freiwinkel 55 gegenüber dem Rahmenprofil versetzt, wodurch zusätzliches Spiel entsteht. Dies ermöglicht ein leichteres Öffnen der Vorrichtung, wenn die Plane demontiert werden soll, insbesondere wenn Schmutz oder kleine Steine an der Innenseite des Zwischenprofils haften bleiben.

Eine Bohrung bzw. eine Öffnung 56 im Zwischenprofil 35 ermöglicht das Herausziehen des Zwischenprofils 35 aus dem hakenförmigen Rahmenprofil 34. Öffnungen dieser Art, die durch Bohren oder Stanzen hergestellt werden, und vorzugsweise an deren Umfang verstärkt sind, können jeweils in bestimmten Abständen entlang des Rahmens vorgesehen sein.

Um zu verhindern, dass sich Staub, Schmutz, Feuchtigkeit etc. im Spalt zwischen Keder der Plane und Kederhalter 39 ansammelt, weist die Plane im Bereich des Kederhalters 39 einen schürzenförmigen Teil 57 auf, der auf beiden Seiten den Spalt zwischen Keder und Kederhalter 39 abdeckt bzw. dagegen drückt. Der schürzenförmige Teil 57 kann entweder, wie in Fig. 9 gezeigt, einstückig mit der Plane ausgebildet sein oder aber auch nachträglich angebracht werden, beispielsweise durch Aufkleben, Aufschmelzen, Vernähen etc.

Es wird daher mit den erläuterten Maßnahmen eine zuverlässige Fixierung der einzelnen Bestandteile des Rahmens auch bei fehlender Plane erreicht, ohne dass dabei irgendeine Beeinträchtigung der Benutzung oder des Handhabens des Rahmens in Kauf genommen werden müßte.

Die Erfindung ist nicht auf die dargestellten und beschriebenen Ausführungsbeispiele beschränkt, sondern kann verschiedentlich abgewandelt werden. So können beispielsweise die Profilteile, die den Rahmen bilden und/oder die Profilteile, die mit der Plane verbunden sind, mehrstückig ausgebildet sein, wobei Abstände zwischen den einzelnen Teilen vorgesehen sein können. Dadurch kann Gewicht gespart werden, die Plane ist leichter zu falten, es können, bei LKWs und dem Transport von Gegenständen, die über die Plane an einzelnen Stellen vorstehen, Ausnehmungen freigelassen werden und ähnliches mehr.

## Patentansprüche

1. Spannrahmen für eine Plane, insbesondere zur Montage auf einem LKW oder LKW-Anhängen, mit einem Rahmenprofil (4, 34) und einem Ankerprofil (5, 25, 38) das auf seiner der Plane (19) zugewandten Längskante einen abgerundeten Fuß (17, 17') aufweist, der in eine von gegebenenfalls mehreren abgerundeten Nuten (16, 16') eines mit dem Rahmenprofil (4, 34) verbundenen Zwischenprofils (35) einsteckbar und darin verschwenkbar ist, wobei das Ankerprofil (5, 25, 38) durch Verschwenken um seinen Fuß (17, 17') in den gespannten Zustand der Plane und dabei in eine zur Planenebene parallele Lage gelangt, und wobei weiters entweder das Ankerprofil (5) oder ein mit ihm schwenkbar verbundenes Kederprofil (26, 39), zumindest eine Aufnahme (22) für einen Keder aufweist und das Ankerprofil (5, 25, 38) zwischen seinem Fuß (17, 17') und der Aufnahme für den Keder bzw. für das Kederprofil (26, 39) das mit dem Rahmenprofil (4, 34) verbundene Zwischenprofil (35) kontaktiert, **dadurch gekennzeichnet, dass** das Rahmenprofil (34) mehrere Halteleisten (25) aufweist, in die wahlweise das gekröpft ausgebildete Zwischenprofil (35) eingehängt werden kann, das mit dem Ankerprofil (38) zusammenwirkt.

2. Spannrahmen nach Anspruch 1, **dadurch gekennzeichnet, dass** die Ebene der Plane (19) einen kleineren Abstand von der Rückenebene (28) des Rahmenprofils (4) aufweist als der Drehpunkt (27) des Kederprofils (26) am Ankerprofil (5) und dass der Abstand des Drehpunkts (16, 17) des Ankerprofils (5) gegenüber dem Rahmenprofil (4) von der Rückenebene (28) noch größer ist.

3. Spannrahmen nach Anspruch 1 oder 2, **dadurch gekennzeichnet, dass** die Verbindungen zwischen dem Ankerprofil (5, 3 8) und dem Rahmenprofil (4) und/oder die Verbindung zwischen dem Ankerprofil (5, 38) und dem Zwischenprofil (35) und/oder die Verbindung zwischen dem Ankerprofil (5, 38) und dem Kederprofil (39) die Form von Spiralscharnieren aufweisen.

4. Spannrahmen nach einem der voranstehenden Ansprüche, **dadurch gekennzeichnet, dass** die Plane (19) aus zumindest zwei Planenteilen (48, 49) besteht, die durch ein doppeltes Kederprofil (47) miteinander verbunden sind.

5. Spannrahmen nach einem der voranstehenden Ansprüche, **dadurch gekennzeichnet, dass** das Zwischenprofil (35) im Bereich seiner Kröpfung eine in eine Nut (51) des Ankerprofils (34) ragende Leiste (50) aufweist.

6. Spannrahmen nach einem der voranstehenden Ansprüche, **dadurch gekennzeichnet, dass** das Ankerprofil (34) oberhalb seiner obersten Halteleiste (25) einen Vorsprung (52) aufweist, der die Halteleiste (46) des Ankerprofils (38) samt dem oberen Bügelende (53) des Zwischenprofils (35) in Spannrichtung fixiert.

7. Spannrahmen nach einem der voranstehenden Ansprüche, **dadurch gekennzeichnet, dass** die zur Ebene der Plane (19) im Wesentlichen parallele Außenfläche (58) des Kederprofils (26) und/oder des Ankerprofils (38) als glatte Oberfläche ausgebildet ist.

8. Spannrahmen nach einem der voranstehenden Ansprüche, **dadurch gekennzeichnet, dass** die Außenfläche (58) des Kederprofils (26) und/oder des Ankerprofils (38) als Licht reflektierende Oberfläche ausgebildet ist oder mit einer Licht reflektierenden Abdeckung, beispielsweise einer Folie, versehen ist.

## Claims

1. Stenter frame for a tarpaulin, in particular for mounting on a lorry or a lorry trailer, with a frame section (4, 34) and an anchor section (5, 25, 38), which has a chamfered foot (17, 17') on its longitudinal edge facing the tarpaulin (19), the said foot being insertable into one of, if applicable, several chamfered grooves (16, 16') of an intermediate section (35) connected to the frame section (4) and being pivotable therein, with the anchor section (5, 25, 38) moving into the position in which the tarpaulin is tensioned by pivoting around its foot (17, 17'), and thus into a position parallel to the plane of the tarpaulin, and further with either the anchor section (5) or a weatherstrip section (26, 39) pivotably connected to it having at least one mounting (22) for a weatherstrip, and the anchor section (5, 25, 38) between its foot (17, 17') and the mounting for the weatherstrip and/or for the weatherstrip section (26, 39) contacting the intermediate section (35) connected to the frame section (4, 34), **characterised in that** the frame section (34) has several retaining strips (25), from which the intermediate section (35), which is bent at right angles and interacts with the anchor section (38) can be selectively suspended.

2. Stenter frame as Paragraph 1, distinguished by the fact that the plane of the tarpaulin (19) is not as far from the rear plane (28) of the frame section (4) as the pivoting point (27) of the weatherstrip section (26) on the anchor section (5), and that the pivoting point (16, 17) of the anchor section (5) is even further from the rear plane (28) than the frame section (4).

3. Stenter frame as Paragraph 1 or 2, distinguished by the fact that the connections between the anchor section (5, 38) and the frame section (4) and/or the connection between the anchor section (5, 38) and the intermediate section (35), and /or the connection between the anchor section (5, 38) and the weatherstrip section (39) take the form of spiral hinges.

4. Stenter frame as one of the preceeding paragraphs, distinguished by the fact that the tarpaulin (19) consists of at least two tarpaulin sections (48, 49), which are connected to one another by a double weatherstrip section (47).

5. Stenter frame as one of the preceeding paragraphs, distinguished by the fact that the intermediate section (34) has a strip (50) near its right-angle bend which projects into a groove (51) of the anchor section (34).

6. Stenter frame as one of the preceeding paragraphs, distinguished by the fact that the anchor section (34) has a projection (52) above its highest retaining strip (25) which fixes the retaining strip (46) of the anchor section (38) in the direction of tensioning, together with the higher end of the stirrup (53) of the intermediate section (35).

7. Stenter frame as one of the preceeding paragraphs, distinguished by the fact that the external surface (58) of the weatherstrip section (26) and/or the anchor section (38), which is/are essentially parallel to the plane of the tarpaulin (19), take(s) the form of a smooth surface.

8. Stenter frame as one of the preceeding paragraphs, distinguished by the fact that the external surface (58) of the weatherstrip section (26) and/or the anchor section (38) takes the form of a light-reflecting surface, or is provided with a light-reflecting covering - for example, a foil.

## Revendications

1. Cadre de serrage pour une bâche, en particulier pour le montage sur un camion ou une remorque de camion, comportant un profilé de cadre (4, 34) et un profilé d'ancrage (5, 25, 38) qui présente, sur son arête longitudinale tournée vers la bâche (19), un pied arrondi (17, 17') susceptible d'être inséré et localment pivoté dans l'une parmi, le cas échéant, plusieurs rainures arrondies (16, 16') d'un profile intermédiaire (35) relié au profilé de cadre (4), dans lequel cadre de serrage le profilé d'ancrage (5, 25, 38) arrive, par pivotement autour de son pied (17, 17'), dans l'état tendu de la bâche et donc dans une position parallèle au plan de la bâche, et dans lequel cadre de serrage, en outre, le profilé d'ancrage (5) ou un profilé d'accrochage de bourrelet (26, 39), relié pivotant avec ce dernier, présente au moins un logement (22) pour un bourrelet, et le profilé d'ancrage (5, 25, 38) entre en contact, entre son pied (17, 17') et le logement pour le bourrelet ou pour le profilé d'accrochage de bourrelet (26, 39), avec le profilé intermédiaire (35) relié au profile de cadre (4, 34), **caractérisé en ce que** le profilé de cadre (34) présente plusieurs barrettes de maintien (25) contre lesquelles on peut accrocher au choix le profilé intermédiaire (35) formé coudé, et qui coopère avec le profilé d'ancrage (38).

2. Cadre de serrage selon la revendication 1, **caractérisé en ce que** le plan de la bâche (19) présente une plus petite distance, à partir du plan arrière (28) du profilé de cadre (4), que le point de pivotement (27) du profilé d'accrochage de bourrelet (26) sur le profilé d'ancrage (5), et **en ce que** la distance du point de pivotement (16, 17) du profilé d'ancrage (5) est encore plus importante par rapport au profilé de cadre (4) à partir du plan arrière (28).

3. Cadre de serrage selon la revendication 1 ou 2, **caractérisé en ce que** les liaisons entre le profilé d'ancrage (5, 38) et le profilé de cadre (4) et/ou la liaison entre le profilé d'ancrage (5, 38) et le profilé intermédiaire (35) et/ou la liaison entre le profilé d'ancrage (5, 38) et le profilé d'accrochage de bourrelet (39) présentent la forme de charnières en spirales.

4. Cadre de serrage selon l'une des revendications précédentes, **caractérisé en ce que** la bâche (19) se compose d'au moins deux parties de bâche (48, 49), qui sont reliées l'une à l'autre par un double profilé d'accrochage de bourrelet (47).

5. Cadre de serrage selon l'une des revendications précédentes, **caractérisé en ce que** le profilé intermédiaire (35) présente, dans la zone de son coude, une barrette (50) dépassant dans une rainure (51) du profilé d'ancrage (34).

6. Cadre de serrage selon l'une des revendications précédentes, **caractérisé en ce que** le profilé d'ancrage (34) présente une saillie (52), au-dessus de sa barrette de maintien la plus élevée (25), qui fixe la barrette de maintien (46) du profilé d'ancrage (38) ainsi que l'extrémité supérieure (53) de l'étrier du profilé intermédiaire (35), dans la direction de serrage.

7. Cadre de serrage selon l'une des revendications précédentes, **caractérisé en ce que** la surface extérieure (58), sensiblement parallèle au plan de la bâche (19), du profilé d'accrochage de bourrelet (26) et/ou du profilé d'ancrage (38), est réalisé sous forme de surface lisse.

8. Cadre de serrage selon l'une des revendications précédentes, **caractérisé en ce que** la surface extérieure (58) du profilé d'accrochage de bourrelet (26) et/ou du profilé d'ancrage (38) est réalisée sous forme de surface réfléchissant la lumière, ou est munie d'un revêtement réfléchissant la lumière, par exemple une feuille mince.
